# EUROPEAN PATENT SPECIFICATION

(11) **EP 2 824 782 B1**
(45) Date of publication and mention of the grant of the patent: **16.05.2018**
(21) Application number: 14173231.3
(22) Date of filing: 20.06.2014
(51) Int. Cl.: H02G 1/00, H02G 3/00, H02G 3/12, H02G 3/30

(54) **Mounting box for building into a wall, and procedure for building in such a mounting box**
Befestigungsgehäuse zum Einbau in eine Wand, und Verfahren zum Einbau in einem solchen Befestigungsgehäuse
Boîtier de montage de construction dans une paroi et procédure pour la construction d'un tel boîtier de montage

(30) Priority: 21.06.2013 BE 201300429; 21.06.2013 BE 201300430; 21.06.2013 BE 201300431
(43) Date of publication of application: 14.01.2015
(73) Proprietor: Niko NV, 9100 Sint-Niklaas (BE)
(72) Inventor: Cooreman, Tom, 9310 Meldert (Aalst) (BE); Daelman, Luc, 9160 Eksaarde (BE)
(74) Representative: D'Halleweyn, Nele Veerle Trees Gertrudis

(56) References cited:
- DE-A1-102006 013 176
- US-A- 3 908 074
- US-A- 6 086 390
- US-A1- 2003 056 968

## Description

The present invention relates to a mounting box for building into a wall, in particular a prefabricated or prefab wall, and to a method for building such a mounting box into a wall.

Mounting boxes for building into a wall are well known in the art. They have as an advantage that an electric or electronic functional module such as a socket, a switch, a network termination point and the like, can be safely built into a wall, whereby the necessary cable connections are realized in the mounting box, so that after building in, only a small volume of the functional module will be outside the volume of the wall itself. Such mounting boxes have, however, the disadvantage that an electrician has to perform a relatively large amount of work on site, such as pulling cables, connecting these cables, mounting the connected functional module in the mounting box, and attaching a cover frame. This requires skilled staff.

Building the mounting boxes with functional module into a prefabricated wall can save a lot of time at the construction site and moreover does not require skilled or trained staff. However, a problem that can arise during manufacturing the prefabricated wall is that during pouring wall material into the mould, the mounting box can slightly move which leads to the mounting box not being well aligned in the resulting prefabricated wall. This may increase the difficulty to finish the installation. For example, it may be difficult to provide a cover frame onto the functional module, when this is not well aligned. Moreover, it is not aesthetically attractive when the functional module appears to be not properly aligned in the wall.
The document DE10 2006 013 17 A1 describes a box mounted with adhesive tape on a wall to be plastered

Embodiments of the invention aim at providing a mounting box for building into a prefabricated wall that allows proper alignment in the mould before pouring wall material into the mould for fabricating the wall without complicating the process. The invention also provides a method for building such a mounting box into a prefabricated wall.

According to one aspect of the invention, a mounting box is provided for building into a prefabricated wall. The mounting box comprises at least one tubular part with an open front end and an open back end. The open front end of each of the at least one tubular part is bordered by a small edge which is provided with a double-sided tape. The mounting box furthermore comprises alignment means for introducing a gap or height difference between a mould and the mounting box when placing the mounting box into the mould. The alignment means comprises a weakened boundary directly or indirectly connecting it to the mounting box such that, when applying a force to the alignment means or to the mounting box in general in a direction towards the mould, the alignment means is removed e.g. by breaking off, thereby removing the gap and fixing the mounting box to the bottom of the mould in a properly aligned way.

With directly connecting the alignment means to the mounting box is meant that the alignment means is connected to a part of the mounting box. With indirectly connecting the alignment means to the mounting box is meant that the alignment means is connected to an additional part attached to the mounting box, this additional part being different from the parts of the mounting box.

A mounting box according to embodiments of the invention allows for a proper alignment of the mounting box in the prefabricated wall with only small effort. This may lead to time saving in the factory where the walls are being built.

According to embodiments of the invention, the alignment means may be provided on the edge of the mounting box and protrude in a direction away from the edge and substantially perpendicular to a plane of a base of the edge. According to these embodiments, the weakened boundary of the alignment means may be formed between the base of the alignment means and the edge of the mounting box. In this embodiment, the alignment means is directly connected to the mounting box.

According to other embodiments, the alignment means may be provided on protrusions extending from a side of the edge of the mounting box in a direction substantially parallel with a plane of the edge. According to these embodiments, the weakened boundary of the alignment means may be formed between the base of the alignment means and the protrusions. In this embodiment, the alignment means is indirectly connected to the mounting box. In other words, the alignment means is connected to the mounting box through the protrusions.

According to still further embodiments of the invention, the alignment means may extend from a side plane of the tubular part of the mounting box perpendicular to a plane of the edge, the alignment means thereby making an angle with that side plane. According to these embodiments, the weakened boundary may be formed between the base of the alignment means and the side plane of the tubular part. In this embodiment, the alignment means is directly connected to the mounting box.

The mounting box may furthermore comprise a support element that is provided between the alignment means and the side plane of the tubular part in order to strengthen the alignment means when the mounting box is transported or made ready for use in the manufacturing process of the wall.

According to embodiments of the invention, the double-sided tape may, for example, be a vinyl tape, an acryl tape, a butyl tape or the like.

The mounting box may furthermore comprise a closing part which is attachable to the open back end of the at least one tubular part. According to embodiments of the invention, the at least one tubular part and the closing part may be adapted to tightly enclose one or more conduits. The conduits may typically be flexible conduits, but may also, for particular applications, be rigid conduits.

According to embodiments of the invention, the mounting box may furthermore comprise a cover for closing off the open front side of the at least one tubular part. According to embodiments of the invention, the cover may be provided with a coupling means for coupling the cover to the insert part. The coupling means may be designed to pull the insert part from the building-in position to the use position when removing the cover.

According to other embodiments of the invention, the open front side of the at least one tubular part may be closed off by a removable foil.

According to embodiments of the invention, the mounting box may furthermore comprise an insert part which is mountable in the mounting box and which comprises a functional module connectable with at least one cable. The insert part may be adapted for being able to position the insert part at least in building-in position and a use position and for moving the insert part from the building-in position to the use position. Hereby, in the use position, the insert part partly protrudes out of an open side of the mounting box so that a cover element such as, for example, a cover frame can be attached to the insert part. In the building-in position, the insert part does not protrude out of the open side of the mounting box or protrudes less out of the open side of the mounting box than in the use position.

According to a further aspect of the invention, a method is provided for building a mounting box into a prefabricated wall. The method comprises providing a mounting box comprising at least one tubular part with an open front end and an open back end, a small edge of the open front end being provided with a double-sided tape and alignment means for introducing a gap or height difference between a mould and the mounting box when placing the mounting box into the mould. The mounting box is then placed into the mould, the open front end of the at least one tubular part thereby facing the bottom of the mould. When the mounting box is placed in the mould, a cover paper of the double-sided tape is removed. Because of the presence of the alignment means the front side of the mounting box is not touching the bottom of the mould so that the mounting box can be properly aligned. When a desired position of the mounting box is obtained, a force is applied to the mounting box in a direction towards the mould for fixing the mounting box to the bottom of the mould.

According to embodiments of the invention, the method may, before removing the cover paper from the double-sided tape and placing the mounting box in the mould, furthermore comprise providing an insert part in the at least one tubular part, the insert part comprising a via at least one cable connectable functional module, connecting the functional module via the at least one cable, and closing the open back end of the at least one tubular part by means of a closing part.

After the mounting box is fixed to the bottom of the mould, wall material is poured into the mould for the manufacturing of the prefabricated wall.

The present invention will be explained on the basis of a number of, by no means limiting, exemplary embodiments with reference to the attached drawings, in which:
Figure 1 schematically illustrates a mounting box according to an embodiment of the invention;
Figure 2 shows a detail of the alignment means of the mounting box of figure 1;
Figure 3 schematically illustrates a mounting box according to an embodiment of the invention;
Figure 4 shows details of the alignment means of the mounting box of figure 3;
Figure 5 schematically illustrates a mounting box according to an embodiment of the invention;
Figure 6 shows a detail of the alignment means of the mounting box of figure 5;
Figures 7A and 7B schematically illustrate further embodiments of a mounting box according to the invention;
Figure 8 illustrates a dismounted perspective view of a mounting box according to an embodiment of the invention;
Figures 9A-9C illustrate sections of a mounting box according to an embodiment of the invention with a functional module in respectively an installation position, a building-in position (also called pouring position) and a use position; and
Figures 10A-10C schematically illustrate steps of a method according to an embodiment of the invention.

In the drawings, identical or similar parts in different embodiments are referred to with the same reference numbers.

The present invention provides a mounting box for building into a prefabricated wall. The mounting box comprises at least one tubular part with an open front end and an open back end, the open front end being bordered by a small edge.
The edge of the open front end is provided with a double-sided tape and the mounting box furthermore comprises alignment means for introducing a gap or height difference between a bottom of a mould and the mounting box when placing the mounting box into the mould for fabricating the wall. The alignment means, which may also be referred to as alignment feet or alignment protrusions, comprises a weakened boundary directly or indirectly connecting it to the mounting box such that, when applying a force to it, the alignment means is removed, e.g. by breaking off along the weakened boundary.

A mounting box according to embodiments of the invention allows proper alignment of the functional module in the wall with only small effort. This may lead to time saving in the factory where the walls are being built. Because a small gap is formed between the mounting box and the mould before fixing the mounting box to the mould, corrections can still easily be performed for properly aligning the mounting box in the mould, before sticking the mounting box to the mould.

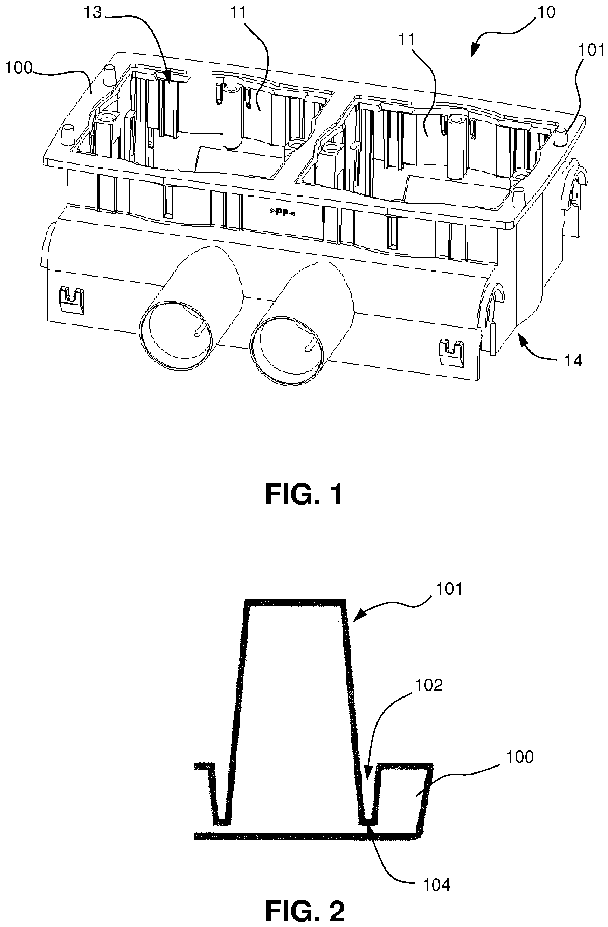

Figures 1 and 2 illustrate a mounting box 10 according to one embodiment of the invention. According to this embodiment, the mounting box 10 comprises two tubular parts 11. However, it is understood by a person skilled in the art that the mounting box 10 can have any suitable number of tubular parts 11 as is possible or required. For example, the mounting box 10 may also have only one tubular part 11 or may have more than two tubular parts 11. The tubular parts 11 have an open front end 13 and an open back end 14. The terms "front" and "back" refer to the front side and back side when the mounting box 10 is built into a vertical prefabricated wall. Hereby the front side is visible at the surface of the wall, when placed at the construction side, while the back side is located in the wall. The open front end 13 of the tubular parts 11 is bordered by a small edge 100. This small edge 100 is, according to the invention, provided with a double-sided tape (not visible in the drawing). This double-sided tape is for fixing the mounting box 10 to the bottom of the mould, such that, during pouring the wall material into the mould during the manufacturing of the wall, the mounting box 10 does not move. The double-sided tape may be any tape known by a person skilled in the art and suitable for, at one side, being fixed to the material of the mould and, on the other side, being fixed to the material of the mounting box 10. According to embodiments of the invention, the double-sided tape may, for example, be a vinyl tape, an acryl tape, a butyl tape or the like.

According to the invention, the mounting box 10 furthermore comprises alignment means 101 for properly aligning the mounting box 10 before securing it to the bottom of the mould. The alignment means 101 may, for example, be alignment feet or alignment protrusions which, according to the present embodiment, are provided on the edge 100 of the mounting box 10 and extend in a direction substantially perpendicular to and away from that edge 100. The alignment means 101 comprises a weakened boundary 102 (see figure 2). The weakened boundaries 102 are, according to the present embodiment, formed between the base 104 of the alignment means 101 and the edge 100 of the mounting box 10 (see figure 2). This weakened boundary 102 is, in the example given, formed by making the material of the mounting box 10 of the edge 100 thinner at the location of the basis 104 of the alignment means 101 than the rest of the mounting box 10. The weakened boundary 102 directly connects the alignment means 101 to the mounting box 10. By directly connecting the alignment means 101 to the mounting box 10 is meant that the alignment means 101 and the weakened boundary 102 thereof are connected to a part of the mounting box 10, in the present example the edge 100 of the mounting box 10.

The alignment means 101 introduces a gap or height difference between the mounting box 10 and the bottom of the mould, when the mounting box 10 is placed into the mould. In that way, the mounting box 10 can be properly aligned and fixed to the bottom of the mould in an easy way.

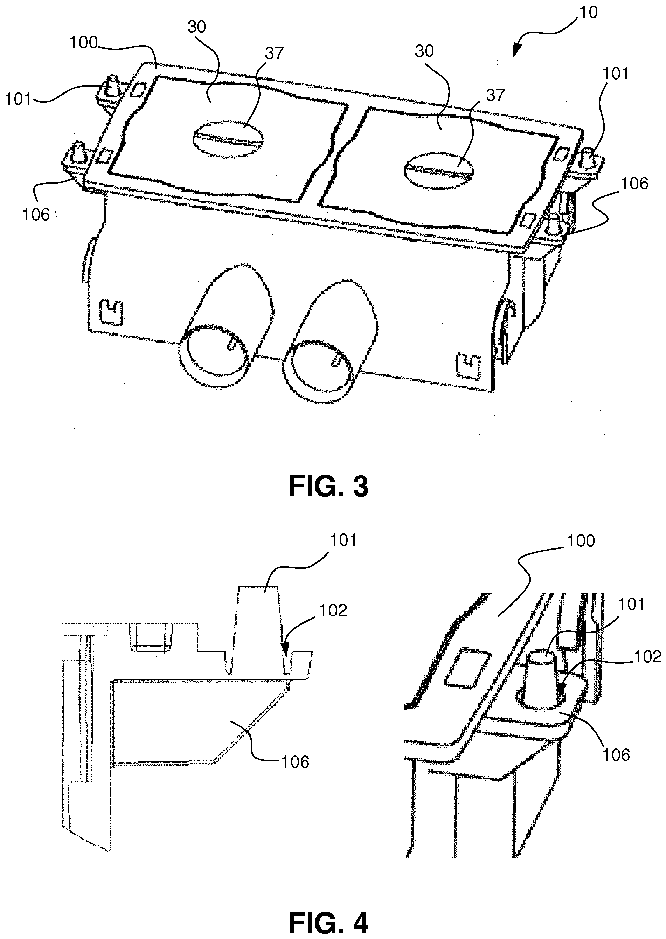

Instead of the alignment means 101 being provided on the edge 100 of the mounting box 10, the alignment means 101 may, according to further embodiments of the invention, also be provided on protrusions 106 extending from a side of the edge 100 of the mounting box 10 in a direction substantially parallel with the plane of the edge 100. Or in other words, the protrusions 106 may lie in a same plane of the edge 100 of the mounting box 10. This is illustrated in figure 3. According to this embodiment, the weakened boundaries 102 are formed between the base 104 of the alignment means 101 and the protrusions 106 (see figure 4). In the present example, the weakened boundary 102 indirectly connects the alignment means 101 to the mounting box 10. By indirectly connecting the alignment means 101 to the mounting box 10 is meant that the alignment means 101 and the weakened boundary 102 connected to the mounting box 10 through the protrusions 106.

In the example given in figure 3, the front open end 13 of the tubular parts 11 is closed off with a cover 30. This cover 30 may be provided with cutouts 37 that form a grip in which can fit, for example, a tool for easy removal of the cover 30 (see further).

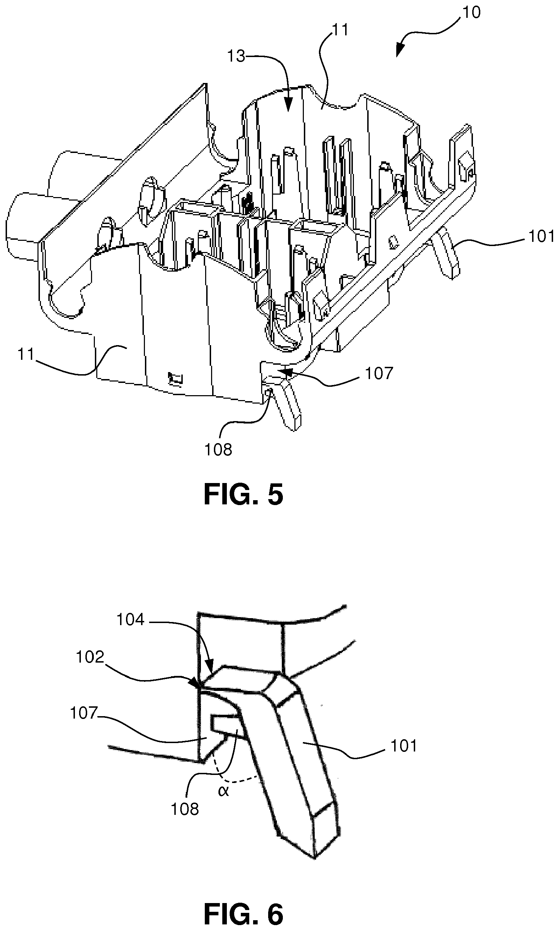

According to still another embodiment of the invention, the alignment means 101 may extend from a side plane 107 of the tubular part 11 perpendicular to the plane of the edge 100 (see figure 5). Figure 5 illustrates a mounting box 10 seen from the bottom, which is opposite to the views in the first and second embodiment (respectively figure 1 and figure 3), where the mounting box 10 is shown from the front side. The alignment means 101 according to the present embodiment makes an angle α with the side plane 107. The weakened boundaries 102 are formed between the base 104 of the alignment means 101 and the side plane 107 of the tubular part 11 of the mounting box 10 (see figure 6). According to the present example, the weakened boundaries 108 directly connect the alignment means 101 to the mounting box 10. According to embodiments of the invention, a support element 108 may be provided in between the alignment means 101 and the side plane 107 of the tubular part 11 of the mounting box 10. The support element 108 is for strengthening the alignment means 101 when the mounting box 10 is transported or prepared for use in the manufacturing process of the wall W. The support element 108 is preferably such that, when a force is applied to the mounting box 10 for fixing it to the bottom of the mould 103, the support element 108 is, similar to the alignment means 101, removed by e.g. breaking off.

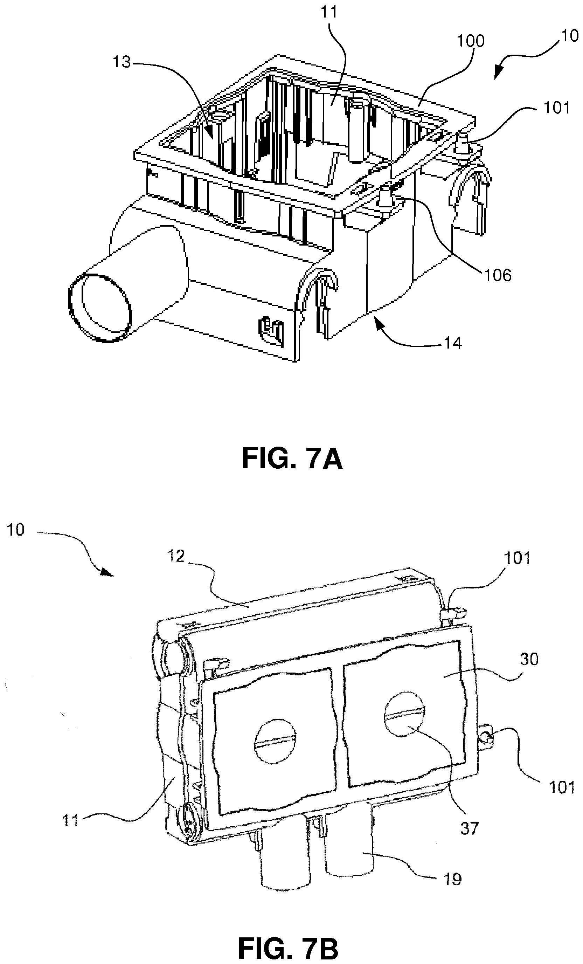

In the above examples, the mounting box 10 always comprises two tubular parts 11. However, as already mentioned above, the mounting box 10 may also comprise only one tubular part 11 or may comprise more than two tubular parts 11. Figure 7 illustrates a mounting box 10 comprising one tubular part 11. In the example illustrated in figure 7A the alignment means 101 is provided on protrusions 106 extending from an edge 100 of the tubular part 11, similar as illustrated in figure 4. However, it has to be understood that the alignment means 101 may be located at any suitable place on the mounting box 10, as described in all embodiments above.

For the sake of completeness, it has to be noted that the invention can also be used for mounting boxes 10 comprising more than two tubular parts 11.

It has further to be noted that, instead of one type of alignment means 101, as illustrated in the above embodiments, a mix of different types of alignment means 101 may be used for one mounting box 10. For example, a mounting box 10 may comprise one or more alignment means 101 located on the edge 100 of the tubular part 11 as illustrated in figure 1 and 2 and may furthermore comprise one or more alignment means 101 extending from a side plane 107 of the tubular part 11 as illustrated in figure 5 and figure 6. This is illustrated in figure 7B. Or a mounting box 10 may comprise one or more alignment means 101 located on the edge 100 of the tubular part 11 as illustrated in figure 1 and 2 and may furthermore comprise one or more alignment means 101 positioned on protrusions 106 extending from the edge 100 of the tubular part 11 or may comprise any other suitable combination of alignment means 101 as can be thought of by a person skilled in the art.

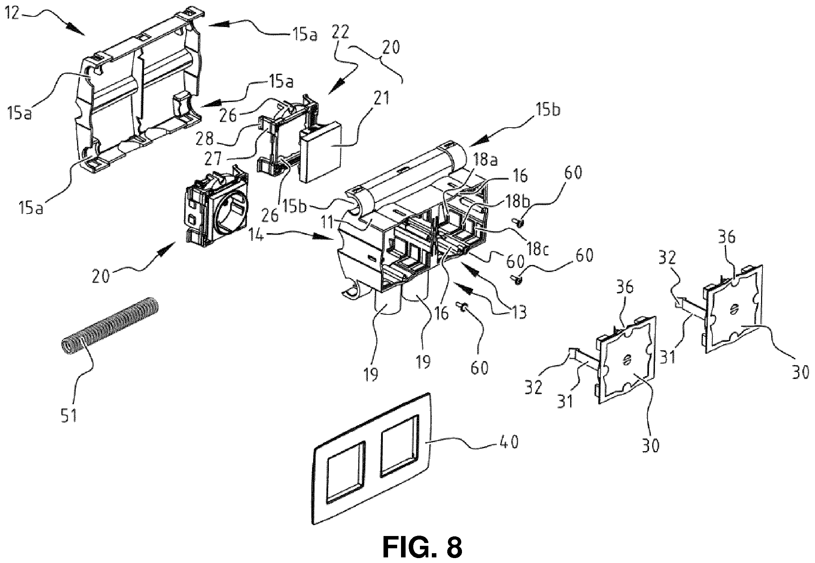

For illustrating further components that may be part of the mounting box 10 according to embodiments of the invention, a dismounted perspective view of a mounting box 10 is illustrated in figure 8. This dismounted view shows different parts of a mounting box 10 in general, which can all be applied to a mounting box 10 according to embodiments of the invention. This figure does not show the alignment means, but a person skilled in the art understands that this figure is only for the sake of describing the different parts of the mounting box 10 and is not intended to limit the invention in any way.

Figure 8 shows that the at least one tubular part 11 is suitable for receiving an insert part 20 comprising a via at least one cable connectable functional module 21. In addition to the functional module 21, the insert part 20 typically comprises a mounting profile 22 which is adapted to mount the insert part 20 in the tubular part 11. The at least one cable 50 is preferably provided in one or more cable conduits 51, and each conduit 51 is provided between the tubular part 11 and the closing part 12 (see further).

The mounting box 10 illustrated is intended for building in two functional modules 21. The two tubular parts 11 have been designed as a single piece. A first insert part 20 comprises a mounting profile 22 and a shut-off plate 21. A second insert part 20 comprises a mounting profile 22 and a socket module 21. The open front end 13 of the can be closed using a cover 30. The open back end 14 is closed with the closing part 12 of the mounting box 10.

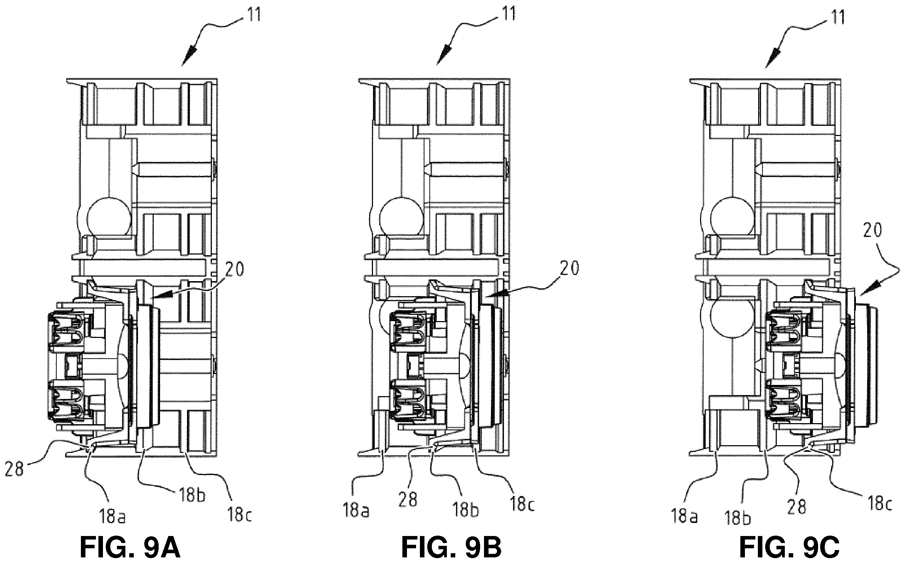

To facilitate mounting the insert part 20 in the tubular part 11, guiding elements 16, 26 are provided. These guiding elements 16, 26 may comprise a first profiling 16 provided in an inner wall of the tubular part 11 and a complementary profiling 26 provided in the mounting profile 22. The first profiling 16 may, for example, be formed as a protruding rounded rib which extends in a longitudinal direction of the tubular part 11, and the second profiling 26 may be formed as a receiving channel for this rib. However, a person skilled in the art understands that many other guiding elements are possible for facilitating mounting the insert part 20 in the tubular part 11. The mounting profile 22 may further be provided with four positioning elements 27 which are situated near the four corners of the mounting profile 22. The positioning elements 27 may, for example, be designed as spring-loaded lips with outwardly protruding thickenings 28 intended for being received in the customized cutouts 18 in the inner wall of the tubular part 11. These cutouts provide different locations for the insert part 20 in the tubular part 11. In the illustrated example three sets of cutouts 18a, 18b, 18c are provided which correspond to an installation position (18a), a building-in position (18b), and a use position (18c). This ensures that the insert part 20 with the functional module 21 can be positioned into three respective positions, i.e. an installation position, a building-in position (also called transport position or pouring position) and a use position, see also figures 9A-9C. In the installation position, the functional module 21 protrudes somewhat out of the open back end 14 of the tubular part 11, such that the cables 50 are easy connectable with the functional module 21. More particularly, it may be beneficial to, in a first step, provide the insert part 20 in the tubular part 11, whereby the insert part 20 is placed in the installation position, and then to provide the cover 30 (see figure 9A). According to embodiments of the invention, connecting of the cables 50 can be performed at a first location, after which the insert part 20 is placed in the building-in position (see figure 9B), the closing part 12 is provided, and the whole can be transported to a second location where the prefabricated walls are then manufactured. According to another embodiment, connecting the cables 50 can be performed in the mould before manufacturing of the prefabricated wall. The mounting box 10 (with insert part 20 in the installation position) is then placed in the mould with the cover 30 facing the bottom. Connecting the cables can thus be performed while the parts 11 are provided in the mould. After connecting the cables 50, the insert part 20 can be pushed downwards in the tubular part 11 to bring the insert part 20 in the building-in position, see figure 9B. In this position, the closing part 12 can be provided on the tubular parts 11.

The one or more cables 50 for connecting the functional module 21 are typically included in a rigid or flexible conduit 51 which is, prior to connecting the cables, fixed in a conduit receiving part 15b which is provided at the open back end 14 of the tubular part 11. The closing part 12 and the tubular parts 11 are designed such that they define a cable tray 15a, 15b in which a cable conduit 51 can be provided. The tubular part 11 is preferably formed such that the part that defines the cable tray 15a, 15b is designed to tightly enclose conduit 51. In that way the one or more conduits 51 can be clamped in the tubular part 11 prior to mounting the closing part 12. In the illustrated example, cable trays 15a, 15 are provided on opposite sides of the functional modules 21, in the example given at a top and a bottom of the tubular part 11. However, designs can be thought of in which, for example, only one cable tray 15a, 15b is provided. For example, one cable tray 15a can be formed at the top of the functional module 21, or one cable tray 15b can be provided at the bottom of the functional module 21, or one cable tray can be provided in the middle of the functional module 21 (i.e. in between the top and the bottom of the functional module 21). In addition, two additional cable trays 19 can be provided which are directed transversely or perpendicular to the cable trays 15a, 15b. The cable trays 19 are typically intended for receiving rigid conduits. Cable trays 15a, 15b are typically intended to realize a connection between a first built-in mounting box 10 and a built-in mounting box 10 at a distance from the first built-in mounting box 10, while cable trays 19 are intended to receive cables for connection to a main electricity line.

The cover 30 is at the back provided with two arms 31 with snap hooks 32. These snap hooks 32 are meant to cooperate with the insert part 20 when the insert part 20 is in the building-in position. Furthermore, cutouts 36 are provided in the cover 30 for receiving the rounded ribs 16 provided on the inner wall of the tubular part 11. Screw heads 60 fit into the cutouts 36. The arms 31 with snap hooks 32 are designed such that, on the one side, they are able to move the insert part 20 from the building-in position to the use position (see figure 9C) and, on the other hand, after the insert part 20 is brought into the use position, to move along the insert part 20 to completely remove the cover 30. This is further achieved by the presence of the screws 60 which ensure that the insert part 20 cannot be pulled out of the tubular part 11. It has to be noted that instead of screws 60, other means can be used to fix the insert part 20, such as for example an abutment part which is for example formed in one piece with the tubular part 11 can be provided. The cover 30 is at its front side provided with two cutouts 37 to form a grip in which, for example, a tool can be positioned. In that way the cover 30 can easily be removed. It has to be understood that this is just an example and a person skilled in the art understands that other grips or designs can be thought of to enable easy removal of the cover 30.

The mounting box 10 may furthermore comprise a cover frame 40 for finishing the installation when the wall is at the construction site and the cover 30 is removed.

Although the mounting box 10, the insert part 20, the cover 30, and the cover frame 40 are schematically shown in simplified format in the above described drawings, a person skilled in the art understands that these elements are provided with the necessary profilings and cutouts to allow attachment of the insert part 20 in the mounting box 10, the provision of the cover 30 to the mounting box 10, the mounting of the cover frame 40 on the insert part 20, the provision of the closing part 12 on the tubular part 11, etc.

According to embodiments of the invention, the functional module 21 may be any functional module known by a person skilled in the art that has to be connected by means of a cable, like for example a switch, a network termination point, a TV connection point, and more generally any electrical or electronic functional module which has to be built into a wall.

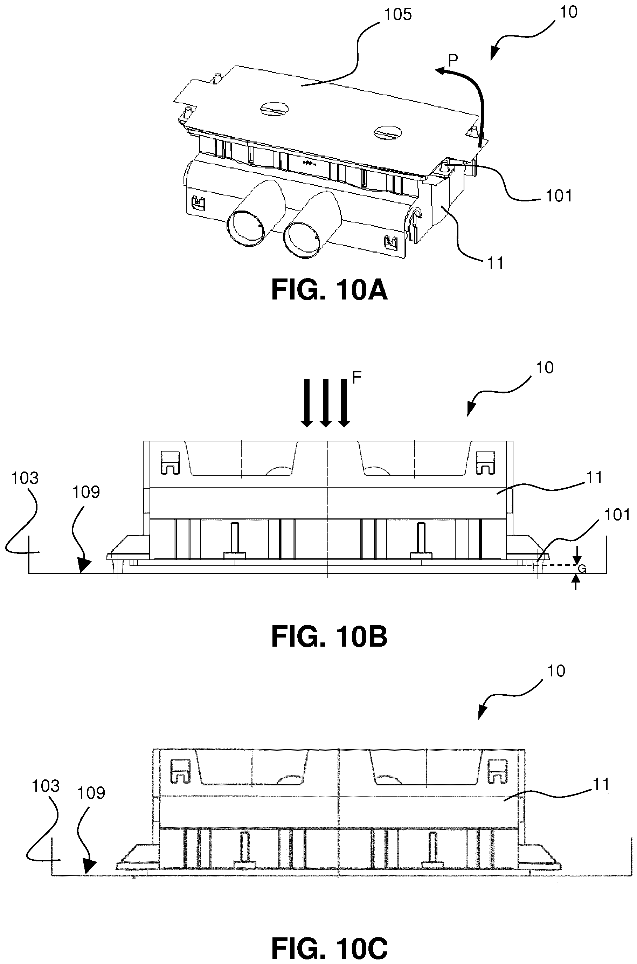

The present invention furthermore provides, in a second aspect, a method for building the mounting box 10 into a prefabricated wall. Figure 10A - 10C illustrate such a method according to an embodiment of the invention.

In a first step, a mounting box 10 is provided comprising at least one tubular part 11 with an open front end 13 and an open back end 14 of which a small edge 100 of the open front end 13 is provided with a double-sided tape and alignment means 101 (see figure 10A). Such mounting box 10 may be any mounting box 10 as described in the embodiments above. The double-sided tape may be any suitable double-sided tape known by a person skilled in the art, such as, for example, a vinyl tape, a butyl tape, an acryl tape or the like. Important is that the double-sided tape on one side adheres well to the material of the mounting box 10 and on the other side adheres well to the material of the mould.

Before placing the mounting box 10 into the mould 103, a paper cover 105 covering the free side of the double-sided tape, i.e. the side opposite to the side that is fixed to the material of the mounting box 10, is removed (see arrow P in figure 10A). Then, the mounting box 10 is placed on the bottom 109 of the mould 103. Hereby the cover 30 which closes of the open front end 13 of the tubular parts 11 is facing the bottom 109 of the mould 103 and the alignment means 101 are touching the bottom 109 of the mould 103 (see figure 10B). The alignment means 101 introduces a gap G in between the mounting box 10 and the bottom of the mould 103. Because of that, the mounting box 10 is not yet fixed to the bottom 109 by the tape, and thus leaves the possibility of properly aligning the mounting box 10. Whenever the mounting box 10 is at the right position, a force F is applied to the mounting box 10 by which the weakened boundary 102 of the alignment means 101 breaks and the alignment means 101 is removed. As a result the mounting box 10 is fixed to the bottom of the mould 103 in a properly aligned way (see figure 10C). It has to be understood that, instead of removing the paper cover 105 of the tape before placing the mounting box 10 in the mould 103, the paper cover 105 can also be removed after the mounting box 10 has been placed in the mould 103 and before the force F is applied to it.

After fixing the mounting box 10 to the bottom 109 of the mould 103, a wall material such as e.g. concrete is poured into the mould 103 for forming the prefabricated wall. Typically, providing the mounting box 10, providing an insert part 20 with a functional module 21, connecting the cables 10 of the functional module 21, and closing off the at least one tubular part 11 with a closing part 12 may be performed at a first location, after which the closed mounting boxes 10 with cabling are transported to a second location where the prefabricated wall is manufactured. However, it is also possible to perform one or more of the steps described above directly in the mould 103 prior to pouring the wall material into the mould 103.

After placing the prefabricated wall on site, the mounting box 10 is oriented such that the cover 30 is flush-mounted with the outer surface of the prefabricated wall. After placing the prefabricated wall the cover 30 can be removed. According to an advantageous embodiment, removal of the cover 30 simultaneously ensures movement of the insert part 20 from the building-in position to a use position. In the use position the insert part 20 is partly protruding out of the mounting box 10 such that a cover frame 40 is mountable on the insert part 20, which finishes the installation of the functional module 21.

The invention is not limited to the above described exemplary embodiments, and a person skilled in the art understands that many modifications can be thought of within the scope of the invention, which is only determined by the following claims.

## Claims

1. Mounting box (10) for building into a prefabricated wall during manufacturing of the wall, the mounting box (10) comprising at least one tubular part (11) with an open front end (13) and an open back end (14), the open front end (13) of the at least one tubular part (11) being bordered by a small edge (100), the edge (100) of the open front end (13) being provided with a double-sided tape **characterized in that** the mounting box (10) furthermore comprises alignment means (101) extending from the mounting box (10) in a direction perpendicular to a plane of the edge (100) of the mounting box (10) for introducing a gap (G) between a mould and the mounting box (10) when placing the mounting box (10) into the mould, the alignment means (101) comprising a weakened boundary (102) at its base (104), such that, when applying a force (F) to the mounting box (10), the alignment means (101) is removed.

2. Mounting box (10) according to claim 1, **characterized in that** the alignment means (101) is provided on the edge (100) of the open front end (13) of the mounting box (10) and whereby the weakened boundary (102) is formed between the base (104) of the alignment means (101) and the edge (100) of the mounting box (10).

3. Mounting box (10) according to claim 1, **characterized in that** the alignment means (101) is provided on protrusions (106) extending from a side of the edge (100) of open front end (13) of the mounting box (10) in a direction substantially parallel with a plane of the edge (100) and whereby the weakened boundary (102) is formed between the base (104) of the alignment means (101) and the protrusions (106).

4. Mounting box (10) according to claim 1, **characterized in that** the alignment means (101) extends from a side plane (107) of the tubular part (11), the alignment means (101) making an angle with the side plane (107) and whereby the weakened boundary (102) is formed between the base (104) of the alignment means (101) and the side plane (107) of the tubular part (11).

5. Mounting box (10) according to claim 4, **characterized in that** furthermore a support element (108) is provided between the alignment means (101) and the side plane (107) of the tubular part (11).

6. Mounting box (10) according to any of the previous claims, **characterized in that** it furthermore comprises a closing part (12) for closing off the open back end (14) of the at least one tubular part (11).

7. Mounting box (10) according to any of the previous claims, **characterized in that** it furthermore comprises a cover (30) or a removable foil for closing off the open front end (13) of the at least one tubular part (11).

8. Mounting box (10) according to any of the previous claims, furthermore comprising an insert part (20) mountable in the mounting box (10) and comprising a functional module (21) connectable with at least one cable (50).

9. Mounting box (10) according to claim 8, wherein the mounting box (10) and the insert part (20) are adapted for being able to position the insert part (20) at least in building-in position and a use position and for moving the insert part from the building-in position to the use position, whereby, in the use position, the insert part (20) partly protrudes out of an open side of the mounting box (10) so that a cover element (40) can be attached to the insert part (20), and whereby, in the building-in position, the insert part (20) does not protrude out of the open side of the mounting box (10) or protrudes less out of the open side than in the use position.

10. Method for building a mounting box (10) into a prefabricated wall, the method comprising:
providing a mounting box (10) comprising at least one tubular part (11) with an open front end (13) and an open back end (14), a small edge (100) of the open front end (13) being provided with a double-sided tape and alignment means (101),
removing a cover paper (105) of the double-sided tape,
placing the mounting box (10) into a mould (103), the open front end (13) thereby facing the bottom of the mould (103),
aligning the mounting box (10),
applying a force to the mounting box (10) for removing the alignment means (101), thereby fixing the mounting box (10) to the bottom of the mould (103).

11. Method according to claim 10, furthermore comprising pouring wall material in the mould (103) for manufacturing the prefabricated wall.

12. Method according to claim 10 or 11, furthermore comprising, before removing the cover paper (105) and placing the mounting box (10) in the mould (103):
providing an insert part (20) in the at least one tubular part (11), the insert part (20) comprising a via at least one cable (50) connectable functional module (21),
connecting the functional module (21) via the at least one cable (50), and
closing the open back end (14) of the at least one tubular part (11) by means of a closing part (12).

## Patentansprüche

1. Montagedose (10) zum Einbauen in eine vorgefertigte Wand während der Herstellung der Wand, wobei die Montagedose (10) zumindest ein rohrförmiges Teil (11) mit einem offenen Vorderende (13) und einem offenen Hinterende (14) aufweist, wobei das offene Vorderende (13) des zumindest einen rohrförmigen Teils (11) mit einer kleinen Kante (100) begrenzt ist, wobei die Kante (100) des offenen Vorderendes (13) mit einem doppelseitigen Klebeband bereitgestellt ist, **dadurch gekennzeichnet, dass** die Montagedose (10) ferner Ausrichtmittel (101) umfasst, die sich von der Montagedose (10) in einer Richtung senkrecht zu einer Ebene der Kante (100) der Montagedose (10) erstrecken, um einen Spalt (G) zwischen einer Form und der Montagedose (10) einzubringen, wenn die Montagedose (10) in die Form platziert wird, wobei das Ausrichtmittel (101) eine abgeschwächte Grenzfläche (102) an seiner Basis (104) aufweist, so dass beim Ausüben einer Kraft (F) auf die Montagedose (10) das Ausrichtmittel (101) entfernt wird.

2. Montagedose (10) nach Anspruch 1, **dadurch gekennzeichnet, dass** das Ausrichtmittel (101) an der Kante (100) des offenen Vorderendes (13) der Montagedose (10) vorgesehen ist, und wobei die abgeschwächte Grenzfläche (102) zwischen der Basis (104) des Ausrichtmittels (101) und der Kante (100) der Montagedose (10) ausgebildet ist.

3. Montagedose (10) nach Anspruch 1, **dadurch gekennzeichnet, dass** das Ausrichtmittel (101) an Vorsprüngen (106) vorgesehen ist, die sich von einer Seite der Kante (100) des offenen Vorderendes (13) der Montagedose (10) in einer Richtung im Wesentlichen parallel zu einer Ebene der Kante (100) erstrecken, und wobei die abgeschwächte Grenzfläche (102) zwischen der Basis (104) des Ausrichtmittels (101) und den Vorsprüngen (106) gebildet ist.

4. Montagedose (10) nach Anspruch 1, **dadurch gekennzeichnet, dass** sich das Ausrichtmittel (101) von einer Seitenebene (107) des rohrförmigen Teils (11) erstreckt, wobei das Ausrichtmittel (101) einen Winkel mit der Seitenebene (107) bildet, und wobei die abgeschwächte Grenzfläche (102) zwischen der Basis (104) des Ausrichtmittels (101) und der Seitenebene (107) des rohrförmigen Teils (11) ausgebildet ist.

5. Montagedose (10) nach Anspruch 4, **dadurch gekennzeichnet, dass** ferner ein Stützelement (108) zwischen dem Ausrichtmittel (101) und der Seitenebene (107) des Rohrteils (11) bereitgestellt ist.

6. Montagedose (10) nach einem der vorstehenden Ansprüche, **dadurch gekennzeichnet, dass** sie ferner ein Verschlussteil (12) zum Verschließen des offenen Hinterendes (14) des zumindest einen rohrförmigen Teils (11) umfasst.

7. Montagedose (10) nach einem der vorstehenden Ansprüche, **dadurch gekennzeichnet, dass** sie ferner eine Abdeckung (30) oder eine abziehbare Folie zum Verschließen des offenen Vorderendes (13) des wenigstens einen rohrförmigen Teils (11) umfasst.

8. Montagedose (10) nach einem der vorstehenden Ansprüche, ferner umfassend ein in der Montagedose (10) montierbares Einsatzteil (20) und umfassend ein Funktionsmodul (21), das mit zumindest einem Kabel (50) verbindbar ist.

9. Montagedose (10) nach Anspruch 8, wobei die Montagedose (10) und das Einsatzteil (20) dazu ausgebildet sind, das Einsatzteil (20) zumindest in Einbauposition und Gebrauchsposition zu platzieren und das Einsatzteil von der Einbauposition in die Gebrauchsposition zu bewegen, wobei in der Gebrauchsposition das Einsatzteil (20) teilweise aus einer offenen Seite der Montagedose (10) herausragt, so dass an dem Einsatzteil (20) ein Abdeckelement (40) anbringbar ist, und wobei in der Einbauposition das Einsatzteil (20) nicht aus der offenen Seite der Unterputz (10) herausragt oder weniger aus der offenen Seite herausragt als in der Gebrauchsposition.

10. Verfahren zum Einbauen einer Montagedose (10) in eine vorgefertigte Wand, wobei das Verfahren umfasst:
Bereitstellen einer Montagedose (10), die zumindest ein rohrförmiges Teil (11) mit einem offenen Vorderende (13) und einem offenen Hinterende (14) umfasst, wobei eine kleine Kante (100) des offenen Vorderendes (13) mit einem doppelseitigen Klebeband und einem Ausrichtmittel (101) bereitgestellt wird,
Entfernen eines Abdeckpapiers (105) des doppelseitigen Klebebandes,
Platzieren der Montagedose (10) in eine Form (103), wobei das offene Vorderende (13) dabei dem Boden der Form (103) zugewandt ist,
Ausrichten der Montagedose (10),
Aufbringen einer Kraft auf die Montagedose (10) zum Entfernen des Ausrichtmittels (101), wodurch die Montagedose (10) am Boden der Form (103) befestigt wird.

11. Verfahren nach Anspruch 10, ferner umfassend das Gießen von Wandmaterial in die Form (103) zur Herstellung der vorgefertigten Wand.

12. Verfahren nach Anspruch 10 oder 11, ferner umfassend, vor Entfernen des Abdeckpapiers (105) und Einsetzen der Montagedose (10) in die Form (103):
Bereitstellen eines Einsatzteils (20) in dem zumindest einen rohrförmigen Teil (11), wobei das Einsatzteil (20) ein über zumindest ein Kabel (50) verbindbares Funktionsmodul (21) umfasst,
Verbinden des Funktionsmoduls (21) über das zumindest eine Kabel (50), und
Verschließen des offenen Hinterendes (14) des zumindest einen rohrförmigen Teils (11) mittels eines Verschlussteils (12).

## Revendications

1. Boîte de montage (10) pour la construction dans une paroi préfabriquée pendant la fabrication de la paroi, la boîte de montage (10) comprenant au moins une partie tubulaire (11) avec une extrémité avant ouverte (13) et une extrémité arrière ouverte (14), l'extrémité avant ouverte (13) de l'au moins une partie tubulaire (11) étant bordée par un petit bord (100), le bord (100) de l'extrémité avant ouverte (13) étant muni d'un ruban adhésif double face, **caractérisé en ce que** la boîte de montage (10) comprend en outre des moyens d'alignement (101) s'étendant depuis la boîte de montage (10) dans une direction perpendiculaire à un plan du bord (100) de la boîte de montage (10) pour introduire un espace (G) entre un moule et la boîte de montage (10) lors du placement de la boîte de montage (10) dans le moule, les moyens d'alignement (101) comprenant un contour affaibli (102) à sa base (104), de telle sorte que les moyens d'alignement (101) soient retirés lors de l'application d'une force (F) au boîte de montage (10).

2. Boîte de montage (10) selon la revendication 1, **caractérisé en ce que** les moyens d'alignement (101) sont prévus sur le bord (100) de l'extrémité avant ouverte (13) de la boîte de montage (10), le contour affaibli (102) étant formé entre la base (104) des moyens d'alignement (101) et le bord (100) de la boîte de montage (10).

3. Boîte de montage (10) selon la revendication 1, **caractérisé en ce que** les moyens d'alignement (101) sont prévus sur des parties saillantes (106) s'étendant d'un côté du bord (100) de l'extrémité avant ouverte (13) de la boîte de montage (10) dans une direction sensiblement parallèle à un plan du bord (100), le contour affaibli (102) étant formée entre la base (104) des moyens d'alignement (101) et les parties saillantes (106).

4. Boîte de montage (10) selon la revendication 1, **caractérisé en ce que** les moyens d'alignement (101) s'étendent depuis un plan latéral (107) de la partie tubulaire (11), les moyens d'alignement (101) formant un angle avec le plan latéral (107), le contour affaibli (102) étant formée entre la base (104) des moyens d'alignement (101) et le plan latéral (107) de la partie tubulaire (11).

5. Boîte de montage (10) selon la revendication 4, **caractérisé en ce que,** en outre, un élément de support (108) est prévu entre les moyens d'alignement (101) et le plan latéral (107) de la partie tubulaire (11).

6. Boîte de montage (10) selon l'une quelconque des revendications précédentes, **caractérisé en ce qu'**il comprend en outre une partie de fermeture (12) pour obturer l'extrémité arrière ouverte (14) de l'au moins une partie tubulaire (11).

7. Boîte de montage (10) selon l'une quelconque des revendications précédentes, **caractérisé en ce qu'**il comprend en outre un couvercle (30) ou un film amovible pour obturer l'extrémité avant ouverte (13) de l'au moins une partie tubulaire (11).

8. Boîte de montage (10) selon l'une quelconque des revendications précédentes, comprenant en outre une partie d'insertion (20) pouvant être monté dans la boîte de montage (10) et comprenant un module fonctionnel (21) pouvant être connecté avec au moins un câble (50).

9. Boîte de montage (10) selon la revendication 8, dans lequel la boîte de montage (10) et la partie d'insertion (20) sont adaptés pour pouvoir positionner la partie d'insertion (20) au moins dans une position de montage et une position d'utilisation et pour déplacer la partie d'insertion de la position de montage à la position d'utilisation, et dans lequel, dans la position d'utilisation, la partie d'insertion dépasse partiellement d'un côté ouvert de la boîte de montage (10), de telle sorte qu'un élément de couvercle (40) puisse être fixé à la partie d'insertion (20), et dans lequel, dans la position de montage, la partie d'insertion (20) ne dépasse pas du côté ouvert de la boîte de montage (10) ou dépasse moins du côté ouvert que dans la position d'utilisation.

10. Procédé pour construire une boîte de montage (10) dans une paroi préfabriquée, le procédé comprenant:
pourvoir une boîte de montage (10) comprenant au moins une partie tubulaire (11) avec une extrémité avant ouverte (13) et une extrémité arrière ouverte (14), un bord petit (100) de l'extrémité avant ouverte (13) étant muni d'un ruban adhésif double-face et de moyens d'alignement (101),
enlever un papier de couverture (105) du ruban adhésif double-face,
placer la boîte de montage (10) dans un moule (103), l'extrémité avant ouverte (13) faisant ainsi face au fond du moule (103),
aligner la boîte de montage (10),
appliquer une force sur la boîte de montage (10) pour retirer les moyens d'alignement (101), en fixant ainsi la boîte de montage (10) au fond du moule (103).

11. Procédé selon la revendication 10, comprenant en outre couler un matériau de paroi dans le moule (103) pour fabriquer la paroi préfabriquée.

12. Procédé selon la revendication 10 ou 11, comprenant en outre, avant d'enlever le papier de couverture (105) et de placer la boîte de montage (10) dans le moule (103:
prévoir une partie d'insertion (20) dans l'au moins une partie tubulaire (11), la partie d'insertion (20) comprenant un module fonctionnel (21) pouvant être raccordé à l'aide d'au moins un câble (50),
connecter le module fonctionnel (21) à l'aide de l'au moins un câble (50), et
fermer l'extrémité arrière ouverte (14) de l'au moins une partie tubulaire (11) au moyen d'une partie de fermeture (12).
